(19)

Europäisches Patentamt
European Patent Office
Office européen des brevets

(11)   **EP 2 074 159 B1**

(12)   **EUROPEAN PATENT SPECIFICATION**

(45) Date of publication and mention
of the grant of the patent:
**12.01.2011  Bulletin 2011/02**

(21) Application number: **07818327.4**

(22) Date of filing: **21.09.2007**

(51) Int Cl.:
*C08G 63/00* (2006.01)      *C08G 63/66* (2006.01)

(86) International application number:
**PCT/EP2007/008237**

(87) International publication number:
**WO 2008/037400 (03.04.2008 Gazette 2008/14)**

(54) **PROCESS FOR THE PREPARATION OF POLYESTER POLYOLS**

VERFAHREN FÜR DIE ZUBEREITUNG VON POLYESTERPOLYOLEN

PROCÉDÉ DE PRÉPARATION DE POLYOLS DE POLYESTER

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.09.2006  IT MI20061870**

(43) Date of publication of application:
**01.07.2009  Bulletin 2009/27**

(73) Proprietor: **DOW GLOBAL TECHNOLOGIES INC.**
**Midland MI 48674 (US)**

(72) Inventors:
• **VAIRO, Giuseppe**
**42015 Correggio (IT)**
• **DI SERIO, Martino**
**84013 Cava Dei Tirreni (IT)**

• **SANTACESARIA, Elio**
**20139 Milano (IT)**
• **TESSER, Riccardo**
**81100 Caserta (IT)**
• **CAMMAROTA, Francesco**
**84103 Cava Dei Tirreni (IT)**
• **MANDATO, Nicola**
**82020 Foiano Di Val Fortore (IT)**

(74) Representative: **Raynor, John**
**Beck Greener**
**Fulwood House**
**12 Fulwood Place**
**London**
**WC1V 6HR (GB)**

(56) References cited:
**EP-A- 0 593 129     US-A- 3 245 959**
**US-A- 4 043 941**

**Description**

The invention relates to a process for the preparation of polyester polyols. In particular, the present invention concerns a process for the preparation of polyester polyols, a process for the preparation of a polyurethane elastomer and to using such polyester polyols for the preparation of a polyurethane elastomer.

Polyester polyols are generally produced by condensation of polyfunctional carboxylic acids (or their derivatives) with polyfunctional alcohols. Other methods of production include polycondensation of hydroxycarboxylic acids and polymerization of cyclic esters (e.g., lactones). Polyesterification represents an example of condensation polymerization.

Esterification is a reversible equilibrium reaction and therefore the process can only be driven to completion if the resulting water of condensation is continuously removed.

Monomeric units are generally added to the growing chains, while individual chains also react with one another because they may have both carboxyl and hydroxyl terminal groups. Consequently, polyesters exhibit relatively broad molar mass distributions.

Transesterification also accounts for the fact that, if more than two starting materials are employed, these are incorporated into the polyesters in a statistical way, regardless of when they are introduced in the reaction vessel.

The first phase of the esterification is commonly carried out under an inert atmosphere (e.g. nitrogen), and the water of condensation is rapidly removed by distillation through a column, at a temperature higher than 150°C. Once a conversion higher than 90% has been reached, the reaction has to be accelerated, in a second phase, by facilitating the removal of water from the esterification equilibrium. This is done by application of a vacuum (vacuum-melt method), or introduction of a carrier gas (purge-gas method), usually nitrogen.

At low acid values, the reaction mixture tends to become highly depleted in one reactant, toward the end of the reaction, greatly reducing its rate.

Polyester polyols are currently produced industrially either batch-wise or continuously according to a variety of methods. The vacuum-melt and the purge-gas-melt methods are preferred.

Esterification is catalyzed by acids, bases, and transition-metal compounds. However, whenever polyester polyols are intended to be used to produce polyurethane, the commercial use of catalysts is limited because all catalysts tend to have undesirable effects on subsequent polyurethane reactions. In the case of polyesters that are used in reactions where traces of catalyst do not interfere, synthesis is commonly catalyzed with low concentrations (ppm) of compounds of titanium, tin, or antimony.

When an esterification catalyst is utilized, its influence becomes dominant and esterification exhibits second-order kinetics.

It is commonly known that tin catalysts show higher activity in esterification processes for producing aliphatic polyester polyols, even though it is also known that, depending on substrates, titanium compounds can even surpass tin catalytic ability.

Even if tin compounds show an excellent catalytic activity, they are however exposed to oxydation, this entailing "browning" problems and disadvantages.

Further, tin organic compounds decidedly worry for their negative repercussion on environment because of their being extremely biocide, as in the case of tin tributyl. There is therefore a strong desire for alternative catalysts.

Accordingly, titanium and zirconium compounds have been considered, preferring alkoxydes to halogenated compounds since the latter show detrimental effects on the final product. It can be however noted that titanium alkoxydes are exposed to hydrolysis and are therefore required in high amounts.

Some further ameliorating of the catalytic activity has been obtained by using mixed catalysts composed, for example, of titanium isopropoxyde and Sn(II) or Sn(IV) compounds.

US 3,142,733 discloses a process for preparing a highly polymeric linear polyesters by alcoholysis of esters of dicarboxylic acids with a glycol and the subsequent polycondensation in the presence of a tungsten compound, such as tungstic acid and metal tungstates, in order to accelerate polymerization.

US 2,952,664 relates to a process for producing polyethylene terephtalate via inter ester reaction between dimethyl terephtalate and ethylene glycol and subsequent polycondensation in the presence of a catalyst such as stannous formate and mixtures of manganous formate and silicotungstic acid.

US 3,398,124 discloses a process for the production of polyethylene terephtalate by transesterification of dimethyl terephtalate with ethylene glycol and subsequent polycondensation, in the presence of cobaltous tungstate as a polycondensation catalyst.

US 3,036,043 relates to a process for the preparation of high molecular linear polyesters from polymethylene glycols and esters of benzene dicarboxylic acids in the presence of alkaline and/or alkaline earth metal salt of silicic, stannic, selenic, phosphoric and tungstic acid.

US 3, 245, 959 discloses a method of producing a resinous copolyester by reacting a dicarboxylic acid with an aliphatic diol and a saturated aliphatic polyhydric alcohol, at a temperature of at least about 160°C, in the presence of at least a trace of an ion of a metal such as titanium, tin, antimony and bismuth. Derivatives of metals such as lithium, cobalt, nickel, tungsten and molybdenum are reported to be less active.

The use of heterogeneous catalysts, such as sulphonic resins, has been also proposed for the synthesis of polyester polyols.

Because of their instability, the use of sulphonic resins imposes reaction temperatures lower than 120°C, this further entailing carrying out the polycondensation in the presence of an aromatic solvent so to remove water by azeotropic distillation.

Also the use of zeolites is known which, however, is also adversely affected by the fact that their pore dimensions are higher than the ones of the polymer molecules to be produced.

The use of phosphotungstic acid has also been reported [M.N. Timofeeva, Applied Catalysis A: General 256 (2003) 19-35] for esterification reactions.

EP-A-0287840 describes a process for producing a linear polyester through polycondensation of an aromatic dicarboxylic acid and an alkylene glycol in the presence of heat-treated niobium compounds soluble in the reaction mixture.

Although both the niobic acid and the phosphotungstic acid have shown a catalytic activity comparable to that one of titanium based catalysts, it has to be noted that the esterified product obtained by using phosphotungstic acid is intensely coloured and hardly purifiable, being substantially unsuitable to filtration, whereas the use of niobic acid, even suitably bringing to uncoloured esterified products, entails a ten-fold raising of its concentration in order to get results comparable to those ones obtainable with titanium based catalysts.

US 5, 364, 951 discloses supported tungsten-(VI)- or molybdenum-(VI)-based compounds which contain cationic groups from -onium salts anchored onto solid inorganic matrices and the use of such compounds for the heterogeneous oxidation of an organic substrate using hydrogen peroxide as the primary oxidizing agent.

Among the problems associated to using catalysts in the synthesis of polyester polyols, it has to be emphasized that most of such catalysts exert their activity also in hydrolysis, this exposing, self-evidently, both the final polyester polyols and their derivatives to degradation because of the unavoidable presence of water.

Further, the known processes for producing polyester polyols comprising the use of homogeneous catalysts bring necessarily to find at least traces of the latter in the final product, this being peculiarly detrimental to the final polyester polyols because of the reduced stability and because they result to be coloured.

In view of the above noted concomitant activity for hydrolysis, it can be further noted that also the polyurethane possibly produced with such polyester polyols, presenting at least traces of the catalyst, would result to be exposed to such adverse catalytic effect.

On the basis of the Applicant's experience, the known polyester polyols syntheses entail, whenever possible (when the catalyst is heterogeneous), a still unsatisfactory and toilsome recovery of the catalyst, also because of inappropriate dimension of catalyst particles and insufficient mechanical resistance.

The technical problem of obtaining a polyester polyol substantially uncoloured and free from the catalyst used during the synthesis of the former, yet without exposing, at the same time, the resulting polyester polyol, together with the possible polyurethane prepared therefrom, to detrimental hydrolysis and, besides, in the absence of the need of a multi-step recovering of the catalyst, possibly further damaged and/or at least partially inactivated because of unsuitable mechanical properties, remains therefore still unsolved.

The Applicant has unexpectedly found that the aforesaid technical problem can be solved by using at least one supported tungsten compound as a catalyst in a process for the preparation of polyester polyols.

Particularly, the Applicant has found that, according to the invention, the polyester polyol obtained shows no degradation due to hydrolysis and results to be substantially uncoloured and free from the catalyst. As a consequence, the same advantageous considerations apply also to the polyurethane possibly prepared from the polyester polyol resulting from the process of the invention.

Further, the Applicant found out useless to carry out a multi-step recovering of the catalyst, which also shows an extremely favourable ability to be repeatedly used, maintaining its activity substantially unaltered.

Subject-matter of the present invention is a process for the preparation of a polyester polyol comprising:

(i) contacting, at a temperature higher than or equal to 150°C,

-(a) at least one polycarboxylic acid or the correspondent dimer or anhydride thereof,
-(b) at least one polyhydric alcohol; and
-(c) at least one supported tungsten compound;

(ii) removing water; and
(iii) recovering said polyester polyol.

As used herein the term "polyol" is meant to designate those materials having at least one group containing an active hydrogen atom capable of undergoing reaction with an isocyanate. Compounds having at least two hydroxyl groups, primary or secondary, per molecule are especially preferred due to their desirable reactivity with polyisocyanates in order to possibly, and preferably, prepare a polyurethane.

It is preferred to carry out the process of the invention at a temperature higher than or equal to 200°C and, in particular, at a temperature ranging from 210°C to 230°C.

Suitable polycarboxylic acid (a) for the process of the present invention can have two or more carboxylic acid groups or an equivalent number of anhydride groups on the basis that one anhydride group is equivalent to two acid groups. Such polycarboxylic acids are well known in the art. Preferably, the polycarboxylic acid contains two carboxylic acid groups.

Examples of suitable polycarboxylic acids include aliphatic dicarboxylic acids having 2 to 12, preferably 2 to 8 carbon atoms in the alkylene radical. These acids include, for example, aliphatic dicarboxylic acids such as adipic acid, glutaric acid, pimelic acid, suberic acid, azelaic acid, sebacic acid, undecanedioic acid, dodecanadioic acid, succinic or hexanedioic acid; cycloaliphatic acids such as hexahydrophthalic acid and 1,3- and 1,4-cyclohexane dicarboxylic acid; 1,3- and 1,4-unsaturated alkane dioic acids such as fumaric or maleic acids; dimer acids; and aromatic acids such as phthalic acid and terephthalic. The anhydrides of the aforementioned polybasic acids such as maleic anhydride or phthalic anhydride can also be used. A combination of two or more of such polybasic acids may also be used. In one embodiment, it is preferred to use succinic acid, glutaric acid, adipic acid or a combination thereof.

Preferably, the polyhydric alcohol (b) is a diol or a triol. Examples of polyhydric alcohol (b) suitable for the process of the present invention include diols and are preferably ethylene glycol, diethylene glycol, propylene glycol, dipropylene glycol, 1,3-propanediol, 1,10-decanediol, 1,4-butanediol, 1,6-hexanediol, neopentylglycol, 1,3- and 1,4-cyclohexanedimethanol. Also trifunctional or higher alcohols can be used for the manufacture of the polyester polyols according to the present invention; among these alcohols and by way of example, glycerine, trimethylolpropane and pentaheritrol may be mentioned.

In particular, the most preferred supported tungsten compound (c) suitable for the process of the present invention is tungstic acid or ammonium metatungstate.

As a support for tungsten compound (c), every support known in the field is suitable, the most preferred ones being silica or zirconia. The loading of the tungsten compound on the support may be carried out according to methods known in the art.

According to another aspect, it is described a process for the preparation of a polyurethane elastomer comprising reacting the polyester polyol obtained by the above process for the preparation of a polyester polyol with a polyisocyanate.

According to another aspect, it is described the use of the polyester polyol obtained by the above process for the preparation of a polyurethane elastomer.

The ability to adjust the amounts of the at least one polycarboxylic acid (a) and polyhydric alcohol (b) in the process of the present invention for the preparation of a polyester polyol, as well as in the process for the preparation of a polyurethane elastomer, also as far as the suitable polyisocyanate is concerned, is well known to those skilled in the art.

It is however preferred using a weight ratio of the at least one polyhydric alcohol (a) to the at least one polycarboxylic acid (b) wherein the rate of the total -OH groups to the total -COOH groups amounts from 4.0:1 to 1:1, said rate being more preferably equal to 1.10:1 whereas the at least one supported tungsten compound (c) is in a concentration of from 100 ppm to 5000 ppm , more preferably of from 500 ppm to 1000 ppm.

It can be further noted that the polyester polyol obtained by the process of the invention and the suitable polyisocyanate, can be reacted to prepare a polyurethane, using both the prepolymer and the one-shot method, as it is well known to the skilled man.

When preparing a polyurethane elastomer , the polyisocyanate component used advantageously include aliphatic and aromatic isocyanate such as diphenylmethane diisocyanate, polymethylene polyphenylene polyisocyanate, toluene diisocyanate, hexamethylene diisocyanate, isophorone diisocyanate, modified polyisocyanates obtained by modifying these polyisocyanates with urethane, allophanate, carbodiimide or isocyanurate, and mixtures thereof.

Among polyisocyanates suitable for the present invention, urethane-modified aromatic polyisocyanates are preferred, i.e. those ones obtained by reacting an excess of toluene diisocyanate or preferably a methylene diphenylisocyanate with a polyol that is a polyester or a polyether polyol and notably a diol or triol. Applicants have found that methylene diphenylisocyanate modified by reaction with low molecular weight glycol or high molecular weight polyol are equally suitable. Such urethane-modified polyisocyanates can be prepared according to techniques and procedures well known in the art. The term "high molecular weight polyol", referred to the polyols suitable to obtain urethane-modified aromatic polyisocyanates, means a polyol having a molecular weight equal to or higher than 1000.

Hereinafter, the polyol composition used to obtain the urethane-modified polyisocyanate will be referred as first polyol composition whereas the polyol composition to be reacted with polyisocyanate to obtain the final polyurethane will be referred as second polyol composition.

The polyester polyol obtained by the process of the invention can be conveniently used both in such first and/or second polyol compositions.

When preparing a polyurethane elastomer , the polyisocyanate is used in an amount to provide for an isocyanate reaction index of advantageously from about 80 to about 120, preferably from about 90 to about 110, and more preferably from about 95 to about 105. By the term "isocyanate index", it is understood that, at an index of 100, one equivalent of isocyanate is present for each isocyanate reactive hydrogen atom present from the polyol, or other active hydrogen atom bearing substance able to react with the polyisocyanate.

The polyisocyanate content of the urethane-modified polyisocyanate is advantageously higher than or equal to at least 2, preferably higher than or equal to at least 10, and more preferably from about 16 to about 40 weight percent of - NCO group.

Optionally and yet advantageously present in the second polyol composition, when preparing the polyurethane elastomer, are the so-called chain extenders. Suitably for the purposes of the present invention, a chain extender is a material having two isocyanate-reactive groups per molecule and an equivalent weight per isocyanate-reactive group of less than 400, preferably less than 300 and especially from 31 to 125 daltons. Representative of suitable chain-extending agents include polyhydric alcohols, aliphatic diamines including polyoxyalkylenediamines, aromatic diamines and mixtures thereof. The isocyanate reactive groups are preferably hydroxyl, primary aliphatic or aromatic amine or secondary aliphatic or aromatic amine groups. Representative chain extenders include ethylene glycol, diethylene glycol, 1,3-propane diol, 1,3- or 1,4-butanediol, dipropylene glycol, 1,2- and 2,3-butylene glycol, 1,5-pentanediol, 1,6-hexanediol, neopentylglycol, tripropylene glycol, 1,3- and 1,4-cyclohexanediol; bisphenol-A and bisphenol-F; amines such as, for instance, ethylene diamine, 1,4-butylenediamine, 1,6-hexamethylenediamine, phenylene diamine, bis(3-chloro-4-aminophenyl)methane, 3,3'-dichloro-4,4-diaminodiphenyl methane, 4,4'-diaminodiphenylmethane, 1,3-propane di-p-aminobenzene, 2,4-diamino-3,5-diethyl toluene, methylene bisorthochloroaniline (MOCA); and mixtures thereof. 1,3- and/or 1,4-cyclohexane dimethanol may also be used as chain extenders. Whenever used, chain extenders are typically present in an amount from about 0.5 to about 20.0, in particular from about 2.0 to about 16.0 parts by weight per 100 parts by weight of the second polyol composition.

Crosslinkers may be included in the second polyol composition. Suitably for the purposes of this invention, "crosslinkers" are materials having three or more isocyanate-reactive groups per molecule and an equivalent weight per isocyanate-reactive group of less than 400. Crosslinkers preferably contain from 3 to 8, especially from 3 to 4 hydroxyl, primary amine or secondary amine groups per molecule and have an equivalent weight of from about 30 to about 200, especially from about 50 to about 125. Examples of suitable crosslinkers include diethanol amine, monoethanol amine, triethanol amine, mono- di- or tri(isopropanol) amine, glycerine, trimethylol propane, pentaerythritol, sorbitol and the like. Whenever used, suitable amounts of crosslinkers are from about 0.1 to about 1.0 part by weight, especially from about 0.25 to about 0.5 part by weight, per 100 parts by weight of the second polyol composition.

Optionally and yet advantageously present when preparing the polyurethane elastomer are additional additives including catalysts, surfactants, organic or inorganic fillers. In general, said additives are part of the second polyol composition. The use of such additives is well known in the art.

Suitable catalysts include tertiary amines and organometallic compounds such as those described in US 4, 495, 081. When using an amine catalyst, it is advantageously present in an amount of from about 0.1 to about 3.0, preferably from about 0.1 to about 1.5 and more preferably from about 0.3 to about 1.0 weight percent by total weight of the second polyol composition. When the catalyst is an organometallic catalyst, it is advantageously present in an amount of from about 0.001 to about 0.2, preferably from about 0.002 to about 0.15 and more preferably from about 0.01 to about 0.1 weight percent by total weight of the second polyol composition. Particularly useful catalysts for the purposes of the present invention include triethylenediamine, bis(N,N-dimethylaminoethyl) ether and di(N,N-dimethylaminoethyl)amine, dialkyltin dicarboxylate substances including dimethyltin dilaurate, dibutyltin dilaurate, dioctyltin dilaurate, dibutyltin diacetate; and stannous octoate. Combinations of amine and organometallic catalysts may be also advantageously employed.

Suitable surfactants include the diverse silicone surfactants, preferably those which are block copolymers of a polysiloxane and a polyoxyalkylene. Exemplary of such surfactants are the products DABCO™DC-193 (Air Products) and Q4-3667 available from The Dow Corning Company and Tegostab™B4113 or Tegostab™B8404 available from Degussa-Goldschmidt. When present, the amount of surfactants advantageously employed is from about 0.1 to about 2.0, and preferably from about 0.2 to about 1.3 percent by total weight of the second polyol composition. Other suitable surfactants also include non-silicone containing surfactants, such as poly(alkyleneoxides).

Suitable pigments and fillers include for example calcium carbonate, graphite, carbon black, titanium dioxide, iron oxide, alumina trihydrate, wollastonite, prepared glass fibers dropped or continuous, polyesters and other polymeric fibers. Exemplary of other organic fillers include cellulose, wood fiber and polyurethane regrind.

The polyurethane obtained can be advantageously used in a number of fields, self-evidently and especially wherever it is desired to have polyester polyol based systems showing increased hydrolysis resistance, as the skilled reader will easily understand; by way of example, flexible, semi-flexible and rigid foams can be mentioned, solid and microcellular elastomers such as those suitable for shoe sole applications, or soft and/or rigid coatings can be advantageously obtained by the polyurethane resulting as described herein.

As above illustrated, the invention relates to the direct esterification of at least one polycarboxylic acid (a) and of at least one polyhydric alcohol (b) in the presence of at least one supported tungsten compound (c); this heterogeneous catalyst can be placed also in a fixed bed reactor.

According to an embodiment of the invention (E1), reactants and catalyst are loaded in a tank reactor, under stirring. In an another embodiment (E2), the reactants are loaded in a stirred tank reactor while the catalyst is put in a fixed bed reactor. The polycarboxylic acid (a) and the polyhydric alcohol (b) flow throughout the catalytic fixed bed placed within a recycle line.

In both embodiments water is removed continuously from the tank reactor by either distillation under reduced pressure or stripping with an inert gas, vacuum, etc., according to techniques well known in the art.

In other words, the process of the invention can be carried out either according to a so-called 'batch-wise vacuum-melt method' or to a 'purge-gas melt method'.

According to the first instance, the apparatus is a closed system, substantially comprising a stirred-tank reactor equipped with an agitator, a distillation column, a condenser, a receiver, and a vacuum pump. The starting materials are heated in the reactor, with stirring but in the absence of air. Heat is provided by electrical energy, high-pressure steam, or a heat-transfer medium. In the first phase of the reaction, the temperature is held at a temperature higher than or equal to 150°C, preferably between about 150°C and 220 C, under ambient pressure, removing abut 90% of the resulting water by distillation.

A mixture of oligoesters is thus obtained, which is immediately condensed to polyester in a second reaction phase. In the first embodiment (E1), catalyst is added to the reactor while in the second embodiment (E2) the liquid phase is circulated again trough the fixed bed reactor. The reaction is performed at about 170 C-230 C and with stepwise reduction of the pressure to about 0.005 bar. Residual water of reaction is distilled away from the mixture, together with excess polyhydric alcohol and minor by-products such as low molecular weight aldehydes and ketones (present in ppm amounts relative to the final polyester polyol). The process is monitored constantly by measuring the acid value, the hydroxyl number, and the viscosity.

According to the second instance, i.e. the purge-gas melt method, during the second phase of reaction, the distillable products are removed by the passage of an inert gas (f.i., nitrogen) through the mixture, rather than by lowering of the pressure. It can be noted that this method can adversely affect the polyhydric alcohol consumption and that, accordingly, the apparatus has generally to be suitably adapted, for instance equipping the reactor with a gas inlet.

The reacting mixture is allowed to react until the desired conversion is reached and finally recovered.

The polyesters polyols obtained by the process of the invention show preferably a low molecular weight, i.e. lower than or equal to about 10,000; particularly preferred are polyesters polyols showing a molecular weight lower than or equal to about 3,000 whereas the most preferred ones show a molecular weight ranging from about 1,000 to about 3,000.

The following examples illustrate the invention and are not intended to limit the scope thereof.

Example 1

Catalyst

Tungstic acid and ammonium hydrometatungstate (Aldrich, reagent grade) were used both as control catalyst and to prepare the supported catalysts suitable for the process of the invention.

A weighted amount of $H_2WO_4$ was dissolved in $H_2O_2$ (60% vol.) while ammonium hydrometatungstate was dissolved in water, in proportion to incipient wetness of the support. Said solutions were used to impregnate the support silica (Degussa Aerolyst 3038; Degussa Aerolyst 3041; Degussa Aerocat 3002/50; Grace S432) and zirconia (Aldrich, reagent grade) which were previously dried under vacuum at 80°C.

The resulting supported catalyst was then submitted to thermal treatment: 120°C for 24 hours and further 2 hours at 300°C in a muffle kiln.

TABLE 1

| Name | Tungsten Source | Support | % w/w metal |
|------|-----------------|---------|-------------|
| AL3038-10 | Tungstic acid | Aerolyst 3038 | 10 |
| AL3038-20 | Tungstic acid | Aerolyst 3038 | 20 |
| AL3038-30 | Tungstic acid | Aerolyst 3038 | 30 |
| AL3041-10 | Tungstic acid | Aerolyst 3041 | 10 |
| AC3002-10 | Tungstic acid | Aerocat 3002/50 | 10 |

(continued)

| Name | Tungsten Source | Support | % w/w metal |
|---|---|---|---|
| Zr-5 | Tungstic acid | zirconia | 5 |
| Zr(I)-5 | ammonium hydrometatungstate | zirconia | 5 |
| SiWG-5 | ammonium hydrometatungstate | Grace S432 | 5 |

Example 2

Preparation of a polyester prepolymer

7 kg of ethylene glycol (The Dow Chemical Company, purity > 99.1%), 8 kg of diethyleneglycol (The Dow Chemical Company, purity > 99.6%) and 25 kg of adipic acid (Rhodia, purity > 99.8%) were loaded in a 50 litres jacketed stainless steel reactor, equipped with an agitator, a gas inlet and a condenser. Reaction mixture was heated in nitrogen atmosphere. At 155°C, reaction water started to distil, and temperature was raised up to 200°C.
At acidity level 55 mg KOH/g (conversion 90%), the reaction was stopped by lowering the temperature to room temperature.

Example 3

Esterification kinetic runs (semibatch)

400 g of a prepolymer obtained as in example 2, were loaded in a 600 cm$^3$ reactor, equipped with a stirrer (rate: 500 rpm) and a nitrogen inlet (flow: 0.110 m$^3$/h), providing heat by electrical power (set point temperature of the reactor: 220°C).
Samples were withdrawn during the reaction and analyzed for acidity, which is an indicator of the conversion.
Several kinetic runs were performed according to the above procedure, using both the supported catalysts shown in the above table 1, suitable for the process of the invention, and non supported catalyst or other non catalyzed reaction as control systems.
The natural logarithm of acidity vs. time is a straight line, and the slope (b) of said line is proportional to the kinetic constant (a) of the reaction rate.
Said slope can be used to compare the catalytic activity of the catalysts evaluated.
The values measured by the following relation:

$$\texttt{Log[Acidity (mgKOH/g)] = a - b Time (min)}$$

are illustrated in the following table 2.

TABLE 2

| run | catalyst | Weight ratio cat/prepolymer | | b |
|---|---|---|---|---|
| SBRF | Uncatal. reaction | | | 0.0047 |
| SB4 | Tungstic acid | 4.8 | $10^{-4}$ | 0.0112 |
| SB6 | AL3038-10 | 7.4 | $10^{-3}$ | 0.0073 |
| SB7 | AL3038-20 | 7.4 | $10^{-3}$ | 0.0069 |
| SB8 | AL3038-30 | 7.4 | $10^{-3}$ | 0.0078 |
| SB9 | AL3041-10 | 1.4 | $10^{-2}$ | 0.0078 |
| SB10 | AC3002-10 | 7.4 | $10^{-3}$ | 0.0092 |
| SB12 | Zr-5 | 1.0 | $10^{-2}$ | 0.0119 |
| SB14 | Zr(I)-5 | 1.1 | $10^{-2}$ | 0.0156 |
| SB15 | SiWG-5 | 1.1 | $10^{-2}$ | 0.0125 |

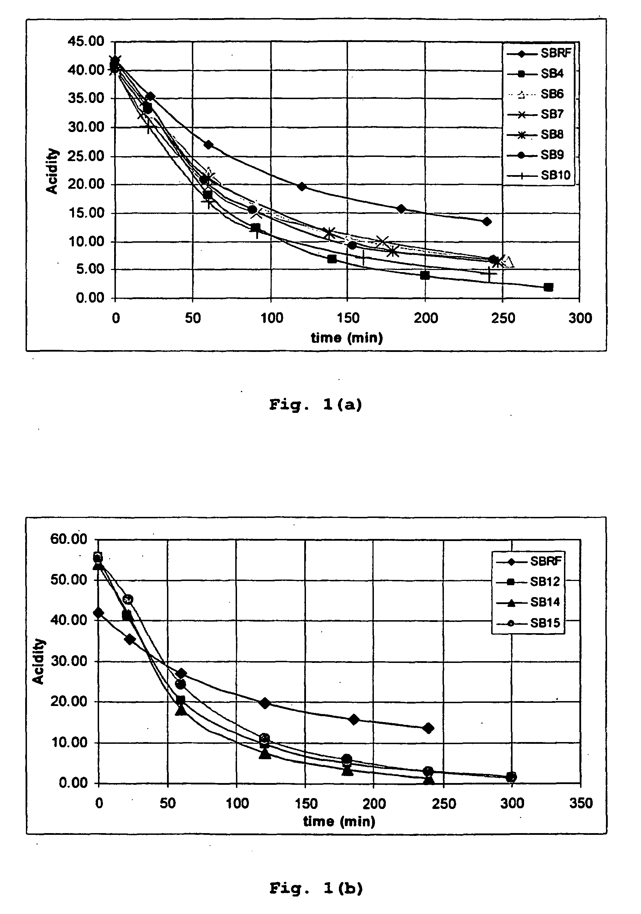

The above data, reflected in Fig. 1(a) and 1(b), demonstrate that any of the supported catalysts showed excellent catalytic ability in comparison with the uncatalyzed reaction (carried out on a prepolymer having a lower starting acidity). Among the supported catalyst, Zr(I)-5 reached acidity values comparable to those ones of Zr-5 and SiWG-5, yet in a shorter time.

Example 4

Esterification kinetic runs (recycle)

400 g of prepolymer prepared as in example 2 were loaded in the reactor of example 3, modified by adding a recycle line packed with the supported catalysts suitable for the process of the invention and the following reaction parameters (stirrer rate: 500 rpm; nitrogen flow: 0.110 $m^3$/h; set point temperature of the reactor: 220°C).
In the runs, the AL3038-30 catalyst of table 1 was used. To test the catalyst stability the used catalyst was not discharged but repeatedly used for four times.
Applying the relation illustrated in the above example 3, the values reported in the following table 3 were measured.

TABLE 3

| run | description | b |
|------|-------------|---|
| RCRF | uncatalyzed reaction | 0.0020 |
| RCW1 | catalyst AL3038-30, fresh | 0.0036122 |
| RCW2 | catalyst AL3038-30, 2nd use | 0.0038814 |
| RCW3 | catalyst AL3038-30, 3rd use | 0.0038702 |
| RCW4 | catalyst AL3038-30, 4th use | 0.0036254 |

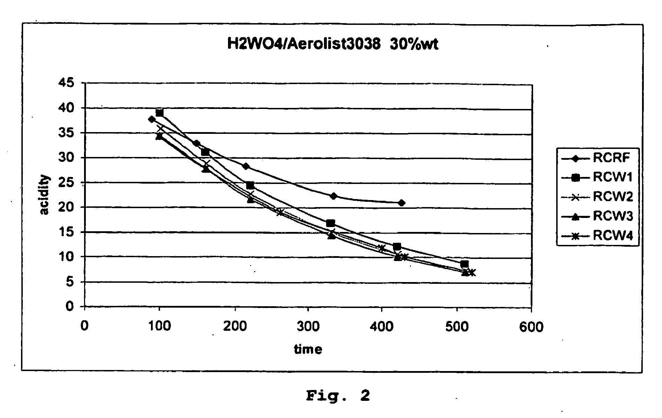

The above data, reflected in Fig. 2, demonstrate that the supported tungstic acid has significant catalytic activity in the esterification reaction and that the catalytic activity is preserved after several reactions.

**Claims**

1. Process for the preparation of a polyester polyol comprising:

    (i) contacting, at a temperature higher than or equal to 150 °C,

        -(a) at least one polycarboxylic acid or the correspondent dimer or anhydride thereof,
        -(b) at least one polyhydric alcohol; and
        -(c) at least one supported tungsten compound;

    (ii) removing water; and
    (iii) recovering said polyester polyol.

2. A process according to claim 1, wherein the temperature is higher than or equal to 200°C.

3. A process according to claim 1 or 2, wherein the temperature ranges from 210°C to 230°C.

4. A process according to any of the previous claims, wherein the at least one polycarboxylic acid (a) is aliphatic, cycloaliphatic or aromatic.

5. A process according to any of the previous claims, wherein the at least one polyhydric alcohol (b) is a diol or a triol.

6. A process according to any of the previous claims, wherein the at least one supported tungsten compound (c) is tungstic acid or ammonium metatungstate.

7.  A process according to any of the previous claims, wherein the at least one polyhydric alcohol (b) and the at least one polycarboxylic acid (a) are in a weight ratio wherein the total -OH groups to the total -COOH groups amounts from 4.0:1 to 1:1.

8.  A process according to any of the previous claims, wherein the at least one polyhydric alcohol (b) and the at least one polycarboxylic acid (a) are in a weight ratio wherein the total -OH groups to the total -COOH groups amounts to 1.10:1.

9.  A process according to any of the previous claims, wherein the at least one supported tungsten compound (c) is in a concentration of from 100 ppm to 5000 ppm.

10. A process according to any of the previous claims, wherein the at least one supported tungsten compound (c) is in a concentration of from 500 ppm to 1000 ppm.

11. A process according to any of the previous claims, wherein the support for the supported tungsten compound (c) is silica or zirconia.

12. A process according to any of the previous claims, wherein the per cent metal content in the supported tungsten compound (c) ranges from 5 to 30 per cent by weight.


**Patentansprüche**

1.  Verfahren für die Zubereitung eines Polyesterpolyols, mit den folgenden Schritten:

    (i) bei einer Temperatur höher als oder gleich 150°C wird Folgendes in Kontakt gebracht:

        (a) mindestens eine Polycarbonsäure oder das entsprechende Dimer oder Anhydrid davon,
        (b) mindestens ein mehrwertiger Alkohol; und
        (c) mindestens eine geträgerte Wolframverbindung;

    (ii) Wasser wird entfernt; und
    (iii) das Polyesterpolyol wird gewonnen.

2.  Verfahren nach Anspruch 1, wobei die Temperatur höher als oder gleich 200°C ist.

3.  Verfahren nach Anspruch 1 oder 2, wobei die Temperatur im Bereich von 210 bis 230°C liegt.

4.  Verfahren nach einem der vorhergehenden Ansprüche, wobei die mindestens eine Polycarbonsäure (a) aliphatisch, cycloaliphatisch oder aromatisch ist.

5.  Verfahren nach einem der vorhergehenden Ansprüche, wobei der mindestens eine mehrwertige Alkohol (b) ein Diol oder ein Triol ist.

6.  Verfahren nach einem der vorhergehenden Ansprüche, wobei die mindestens eine geträgerte Wolframverbindung (c) Wolframsäure oder Ammoniummetawolframat ist.

7.  Verfahren nach einem der vorhergehenden Ansprüche, wobei der mindestens eine mehrwertige Alkohol (b) und die mindestens eine Polycarbonsäure (a) in einem Gewichtsverhältnis vorliegen, wo das Verhältnis der gesamten OH-Gruppen zu den gesamten COOH-Gruppen im Bereich von 4,0:1 bis 1:1 liegt.

8.  Verfahren nach einem der vorhergehenden Ansprüche, wobei der mindestens eine mehrwertige Alkohol (b) und die mindestens eine Polycarbonsäure (a) in einem Gewichtsverhältnis vorliegen, wo das Verhältnis der gesamten OH-Gruppen zu den gesamten COOH-Gruppen 1,10:1 beträgt.

9.  Verfahren nach einem der vorhergehenden Ansprüche, wobei die mindestens eine geträgerte Wolframverbindung (c) in einer Konzentration von 100 ppm bis 5000 ppm vorliegt.

**10.** Verfahren nach einem der vorhergehenden Ansprüche, wobei die mindestens eine geträgerte Wolframverbindung (c) in einer Konzentration von 500 ppm bis 1000 ppm vorliegt.

**11.** Verfahren nach einem der vorhergehenden Ansprüche, wobei der Träger für die geträgerte Wolframverbindung (c) Siliciumdioxid oder Zirconiumdioxid ist.

**12.** Verfahren nach einem der vorhergehenden Ansprüche, wobei der prozentuale Metallgehalt in der geträgerten Wolframverbindung (c) im Bereich von 5 bis 30 Gew.-% liegt.

**Revendications**

**1.** Procédé de préparation d'un polyester-polyol, comprenant les étapes suivantes :

i) mettre en contact, à une température supérieure ou égale à 150 °C,

a) au moins un acide polycarboxylique, un acide dimère correspondant ou un anhydride d'un tel acide,
b) au moins un polyol,
c) et au moins un composé de tungstène supporté ;

ii) éliminer l'eau ;
iii) et récupérer ledit polyester-polyol.

**2.** Procédé conforme à la revendication 1, dans lequel la température est supérieure ou égale à 200 °C.

**3.** Procédé conforme à la revendication 1 ou 2, dans lequel la température vaut de 210 à 230 °C.

**4.** Procédé conforme à l'une des revendications précédentes, dans lequel l'acide polycarboxylique (a) au nombre d'au moins un est aliphatique, cycloaliphatique ou aromatique.

**5.** Procédé conforme à l'une des revendications précédentes, dans lequel le polyol (b) au nombre d'au moins un est un diol ou un triol.

**6.** Procédé conforme à l'une des revendications précédentes, dans lequel le composé de tungstène supporté (c) au nombre d'au moins un est de l'acide tungstique ou du métatungstate d'ammonium.

**7.** Procédé conforme à l'une des revendications précédentes, dans lequel le polyol (b) au nombre d'au moins un et l'acide polycarboxylique (a) au nombre d'au moins un sont utilisés en un rapport pondéral tel que le rapport du total des groupes hydroxyle OH au total des groupes carboxyle COOH vaut de 4,0/1 à 1/1.

**8.** Procédé conforme à l'une des revendications précédentes, dans lequel le polyol (b) au nombre d'au moins un et l'acide polycarboxylique (a) au nombre d'au moins un sont utilisés en un rapport pondéral tel que le rapport du total des groupes hydroxyle OH au total des groupes carboxyle COOH vaut 1,10/1.

**9.** Procédé conforme à l'une des revendications précédentes, dans lequel le composé de tungstène supporté (c) au nombre d'au moins un est utilisé en une concentration de 100 à 5000 ppm.

**10.** Procédé conforme à l'une des revendications précédentes, dans lequel le composé de tungstène supporté (c) au nombre d'au moins un est utilisé en une concentration de 500 à 1000 ppm.

**11.** Procédé conforme à l'une des revendications précédentes, dans lequel le support utilisé pour le composé de tungstène supporté (c) est de la silice ou de la zircone.

**12.** Procédé conforme à l'une des revendications précédentes, dans lequel le pourcentage de métal dans le composé de tungstène supporté (c) vaut de 5 à 30 % en poids.

Fig. 1(a)

Fig. 1(b)

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3142733 A
- US 2952664 A
- US 3398124 A
- US 3036043 A
- US 3245959 A
- EP 0287840 A
- US 5364951 A
- US 4495081 A

**Non-patent literature cited in the description**

- **M.N. Timofeeva.** *Applied Catalysis A: General,* 2003, vol. 256, 19-35